# EUROPEAN PATENT SPECIFICATION

(11) **EP 4 314 513 B1**
(45) Date of publication and mention of the grant of the patent: **07.05.2025**
(21) Application number: 21717491.1
(22) Date of filing: 30.03.2021
(51) Int. Cl.: F02B 19/18, F02B 19/12

(54) **PRECHAMBER, CYLINDER HEAD AND PISTON ENGINE**
VORKAMMER, ZYLINDERKOPF UND KOLBENMOTOR
PRÉCHAMBRE, CULASSE ET MOTEUR À PISTON

(43) Date of publication of application: 07.02.2024
(73) Proprietor: Wärtsilä Finland Oy, 65170 Vaasa (FI)
(72) Inventor: ERONEN, Olli, 65100 Vaasa (FI); LAINE, Jarkko, 65100 Vaasa (FI); LATTANZIO, Vincenzo, 34018 Trieste (IT); OJANPERÄ, Ari-Matti, 65100 Vaasa (FI)
(74) Representative: Berggren Oy
(86) International application number: PCT/FI2021/050226
(87) International publication number: WO 2022/207956

(56) References cited:
- FR-A1- 2 713 705
- KR-U- 19980 044 006
- US-A1- 2019 048 784
- US-A1- 2019 368 410
- US-B1- 8 839 762
- US-B2- 11 085 361

## Description

### Technical field of the invention

The present invention relates to a prechamber for a cylinder of a piston engine in accordance with the preamble of claim 1. The invention also concerns a cylinder head and a piston engine.

### Background of the invention

Internal combustion engines can be provided with prechambers, also called as precombustion chambers. In prechamber engines, each cylinder is provided with a prechamber, and part or all of the fuel is introduced into the prechamber. Depending on the engine, the fuel can be self-ignited, or a spark plug or some other device can be used for igniting the fuel. The combustion thus starts in the prechamber, but main part of the combustion takes place in the cylinder outside the prechamber. The prechamber construction is beneficial especially in lean burn engines, where part of the fuel is introduced into the prechamber and part of the fuel is mixed with the air before the intake valves. This kind of arrangement can be used, for instance, in spark ignited gas engines. The gas-air mixture in the prechamber is rich compared to the mixture in the cylinder. The rich mixture in the prechamber is ignited by a spark plug and the flames from the prechamber ignite the mixture in the cylinder.

A common problem in prechamber engines is insufficient mixing of air and fuel, which can lead to incomplete combustion. Another problem encountered in pre-chamber engines is excessive heat load of the prechamber components. Other engines are known from FR 2 713 705 A1, KR 1998 0044006 U, US 8 839 762 B1 and US 2019/368410 A1.

### Summary of the invention

An object of the present invention is to provide an improved prechamber for a cylinder of a piston engine, the prechamber comprising a combustion portion, which is configured to receive a mixture of air and fuel for ignition of said mixture, and a nozzle portion, which is configured to establish fluid communication between the combustion portion of the prechamber and a main combustion chamber of the engine, the nozzle portion comprising at least one nozzle opening that is configured to allow flow from the main combustion chamber into the prechamber and flow from the prechamber into the main combustion chamber. The characterizing features of the prechamber according to the present invention are given in the characterizing part of claim 1. Other objects of the invention are to provide an improved cylinder head and an improved piston engine.

According to the invention, the prechamber comprises at least one auxiliary channel having a first end and a second end, the first end opening inside the prechamber into the nozzle portion and the second end opening outside the prechamber, the auxiliary channel being configured so that flow from the main combustion chamber into the prechamber during compression stroke and flow from the prechamber into the main combustion chamber during combustion stroke causes fluid flow through the auxiliary channel into the nozzle portion of the prechamber.

Due to the auxiliary channel, fluid flow is drawn into the nozzle part both during compression stroke and combustion stroke. During compression stroke, the flow improves mixing within the prechamber. During the combustion stroke, the flow cools down the prechamber. It also boosts the flame that is discharged from the prechamber through the at least one nozzle opening.

According to an embodiment of the invention, the cross-sectional area of the auxiliary channel is smaller than the cross-sectional area of the at least one nozzle opening. Advantageously, the cross-sectional area of the auxiliary channel is at most 30 percent of the cross-sectional area of the nozzle opening. The smaller cross-sectional area helps creating conditions, where the flow is drawn into the nozzle portion through the auxiliary channel.

According to an embodiment of the invention, the second end of the auxiliary channel opens onto the outer surface of the nozzle portion. This allows short length of the auxiliary channel.

According to an embodiment of the invention, the second end of the auxiliary channel opens in a mounted state of the prechamber into the main combustion chamber. During compression stroke, a mixture of air and fuel from the main combustion chamber is thus drawn into the nozzle portion through the auxiliary channel. The fuel concentration in the nozzle portion does thus not significantly change, but mixing is improved. During combustion stroke, cooler mixture from the main combustion chamber effectively cools down the nozzle portion.

According to an embodiment of the invention, the auxiliary channel comprises a portion beginning from the first end and being inclined in a mounted state of the prechamber from a lateral direction of the cylinder upwards. Especially during combustion stroke, this helps creating conditions, where fluid flow is drawn into the nozzle portion via the auxiliary channel.

According to an embodiment of the invention, the first end of the auxiliary channel is in a mounted state of the prechamber in the longitudinal direction of the cylinder above the level of the upper edge of the at least one nozzle opening.

According to an embodiment of the invention, prechamber comprises several nozzle openings and the first end of the auxiliary channel is between two nozzle openings.

According to an embodiment of the invention, the auxiliary channel is curved.

According to an embodiment of the invention, the shape of the auxiliary channel opens towards the nozzle portion end of the prechamber. This allows making part of the auxiliary channel inclined upwards and still having the second end opening into the main combustion chamber.

According to an embodiment of the invention, the auxiliary channel is straight, and the first end of the auxiliary channel is located closer to the nozzle portion end of the prechamber than the second end. A prechamber with a straight auxiliary channel is simpler to manufacture than a prechamber with a more complex shape of the auxiliary channel.

According to an embodiment of the invention, the prechamber comprises several auxiliary channels. This allows more fluid to flow into the nozzle portion via the auxiliary channels.

A cylinder head according to the invention is provided with a prechamber defined above.

A piston engine according to the invention comprises a prechamber defined above.

### Brief description of the drawings

Embodiments of the invention are described below in more detail with reference to the accompanying drawings, in which
Fig. 1 shows schematically a cross-sectional view of part of a cylinder and a cylinder head of a piston engine,
Fig. 2 shows a cross-sectional view of a prechamber according to an embodiment of the invention, and
Fig. 3 shows a cross-sectional view of a prechamber according to another embodiment of the invention.

### Description of embodiments of the invention

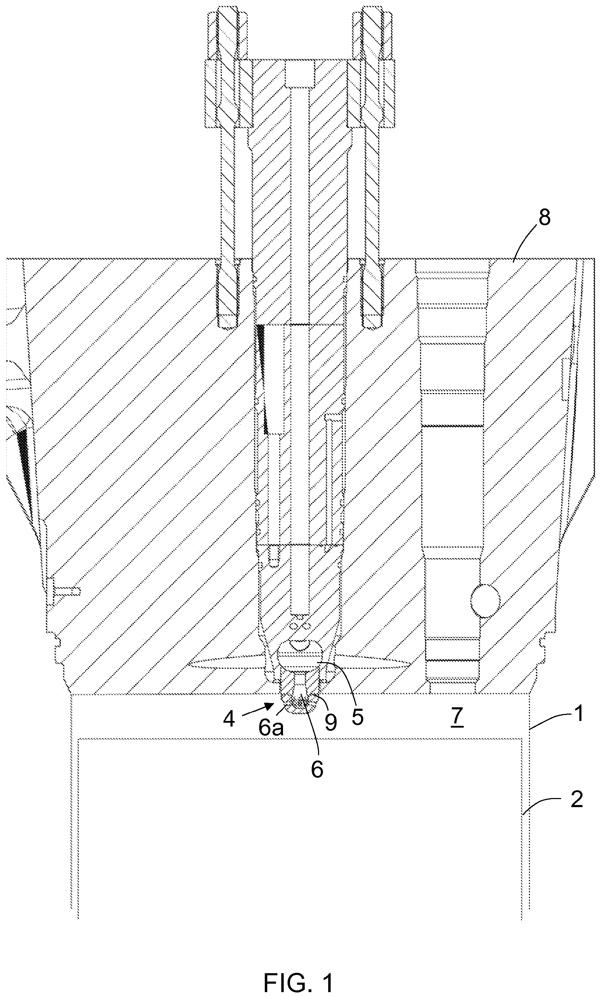

In figure 1 is shown a cylinder head 8 of a piston engine. The engine is a large internal combustion engine, such as a main or an auxiliary engine of a ship or an engine that is used at a power plant for producing electricity. The engine is provided with several cylinders 1. Each cylinder 1 of the engine is provided with a cylinder head 8, which closes the upper end of the cylinder 1. The term "upper end" refers here to that end of the cylinder 1, which is farther from the crankshaft. The cylinders 1 do not need to be arranged vertically, but they can be in some other angle in relation to the base of the engine. A main combustion chamber 7 is formed within the cylinder 1 between the cylinder head 8 and a piston 2 that is arranged to move in a reciprocating manner in the cylinder 1. The wall of the cylinder 1 is formed by a cylinder liner. The main combustion chamber 7 is in fluid communication with a prechamber 4. Intake air or a mixture of intake air and fuel, residual gases of combustion and possible recirculated exhaust gas can thus flow from the main combustion chamber 7 into the prechamber 4. Flow of fluids from the prechamber 4 into the main combustion chamber 7 is also allowed. In the embodiment of figure 1, the prechamber 4 is concentric with the main combustion chamber 7. However, the prechamber 4 could also be positioned differently.

In the embodiment of figure 1, the engine is a spark ignition gas engine, where part of the gaseous fuel is introduced into an intake duct to form a lean air/fuel mixture, and part of the fuel is introduced into the prechamber 4 to form a rich mixture, which is ignited by a spark plug (not shown). The leaner mixture in the main combustion chamber 7 is ignited by the combustion of the richer mixture formed in the prechamber 4. The prechamber 4 is provided with a fuel inlet for introducing fuel into the prechamber 4. The prechamber 4 is also provided with a spark plug.

The prechamber 4 comprises a combustion portion 5 and a nozzle portion 6. The combustion portion 5 is configured to receive a mixture of fuel and air for ignition of the mixture. The nozzle portion 6 is configured to connect the combustion portion 5 of the prechamber 4 to the main combustion chamber 7. In the embodiments of the figures, the nozzle portion 6 comprises a plurality of nozzle openings 6a. The nozzle openings 6a are configured to allow flow from the main combustion chamber 7 into the prechamber 4 and flow from the prechamber 4 into the main combustion chamber 7. The nozzle portion 6 could also be provided with a single nozzle opening.

The nozzle portion 6 has a smaller volume than the combustion portion 5. The nozzle portion 6 forms an elongated channel extending from the combustion portion 5 of the prechamber 4 towards the main combustion chamber 7. The cross-sectional area of the nozzle portion 6 seen in the longitudinal direction of the nozzle portion 6 is smaller than the cross-sectional area of the combustion portion 5 seen in the same direction.

In the embodiments of the figures, the axial direction of the nozzle portion 6 is parallel to the axial direction of the cylinder 1. However, the nozzle portion 6 could also be inclined relative to the axial direction of the cylinder 1.

During compression stroke, mixture of fuel and air flows via the nozzle openings 6a into the nozzle portion 6 of the prechamber 4 and further into the combustion portion 5 of the prechamber 4. Additional fuel is introduced directly into the combustion portion 5. A richer fuel/air mixture is thus formed in the combustion portion 5. The mixture is ignited by the spark plug. After the ignition, the ignited mixture and the combustion products flow from the combustion portion 5 via the nozzle portion 6 and the nozzle openings 6a into the main combustion chamber 7.

In the embodiments of the figures, the prechamber 4 is formed by a body part and a nozzle part. The nozzle portion 6 is formed by the nozzle part and the combustion portion 5 is mainly formed by the body part. The combustion portion 5 is partly delimited by the nozzle part. The prechamber 4 could also be formed by a one-piece part. Alternatively, it could be formed by several parts.

The prechamber 4 according to the invention comprises at least one auxiliary channel 9. The auxiliary channel 9 has a first end 9a and a second end 9b. The first end 9a opens inside the prechamber 4 into the nozzle portion 6. The first end 9a is positioned close to the nozzle openings 6a. The first end 9a is positioned in that half of the nozzle portion 6 that is farther from the combustion portion 5 of the prechamber 4. Preferably, the first end 9a is located in that third of the nozzle portion 6 that is farthest from the combustion portion 5.

The second end 9b opens outside the prechamber 4. The auxiliary channel 9 is configured so that flow between the prechamber 4 and the main combustion chamber 7 causes fluid flow through the auxiliary channel 9 into the nozzle portion 6 of the prechamber 4. During compression stroke, the flow from the main combustion chamber 7 through the nozzle openings 6a into the nozzle portion 6 and further into the combustion portion 5 causes flow from outside the prechamber 4 via the auxiliary channel 9 into the nozzle portion 6. During combustion stroke, flow from the combustion portion 5 via the nozzle portion 6 and the nozzle openings 6a into the main combustion chamber 7 causes flow from outside the prechamber 4 via the auxiliary channel 9 into the nozzle portion 6.

During compression stroke, the flow through the auxiliary channel 9 into the nozzle portion 6 facilitates mixing of the mixture of air and fuel flowing into the pre-chamber 4. During combustion stroke, the flow through the auxiliary channel 9 into the nozzle portion 6 cools down the prechamber 4 and especially the nozzle portion 6 of the prechamber 4. The flow can also boost the flames discharged via the nozzle openings 6a.

The flow through the auxiliary channel 9 into the nozzle portion 6 of the pre-chamber 4 is achieved due to venturi effect. As the fluid flows from the combustion portion 5 of the prechamber 4 or from the main combustion chamber 7 into the nozzle portion 6, which has a smaller cross-sectional area, the fluid speed increases. The increased fluid speed reduces static pressure in the nozzle portion 6, which causes suction via the auxiliary channel 9 into the nozzle portion 6.

The cross-sectional area of the auxiliary channel 9 is smaller than the cross-sectional area of any of the nozzle openings 6a. The cross-sectional area of the auxiliary channel 9 can be, for instance, at most 30 percent of the cross-sectional area of a single nozzle opening 6a. The smaller diameter of the auxiliary channel 9 helps creating the venturi effect.

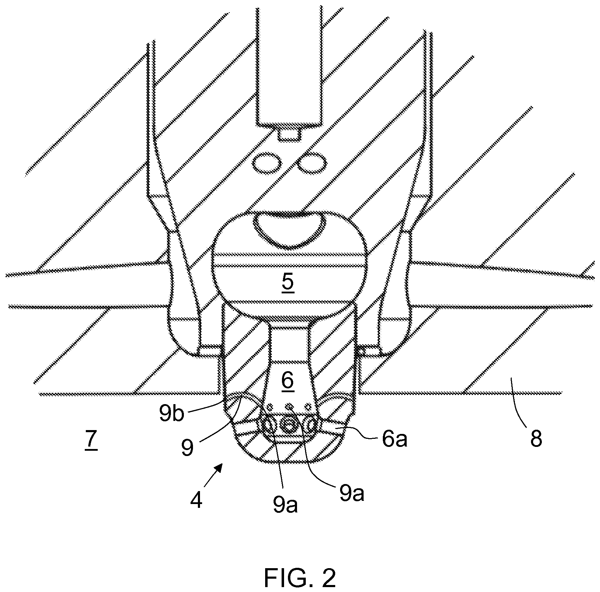

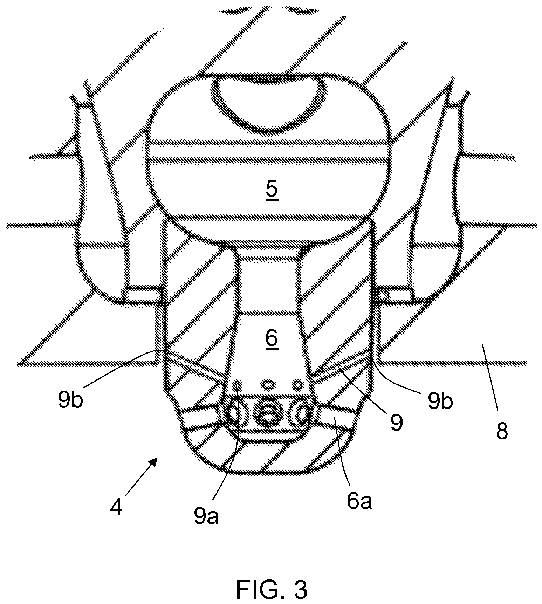

In the embodiments of the figures, the second end 9b of the auxiliary channel 9 opens onto the outer surface of the nozzle portion 6 of the prechamber 4. This minimizes the needed length of the auxiliary channel 9. In the embodiment of figure 2, the second end 9b of the auxiliary channel 9 opens into the combustion chamber 7. In the embodiment of figure 3, the second end 9b of the auxiliary channel 9 opens into a crevice between the nozzle portion 6 of the prechamber 4 and the cylinder head 8. In both embodiments, fluid from the main combustion chamber 7 flows into the auxiliary channel 9. During compression stroke, the fuel concentration of the flow through the auxiliary channel 9 does thus not significantly differ from the fuel concentration of the flow through the nozzle openings 6a. The fuel concentration in the prechamber 4 is thus not substantially affected by the flow through the auxiliary channel 9 but mixing in the nozzle portion 6 is improved. During combustion stroke, cooler fluid flows from the main combustion chamber 7 into the nozzle portion 6, which is thus effectively cooled down.

In the embodiments of the figures, the auxiliary channel 9 comprises a portion beginning from the first end 9a of the auxiliary channel 9 that is inclined in a mounted state of the prechamber 4 from a lateral direction of the cylinder 1 upwards. In the embodiment of figure 3, the whole auxiliary channel 9 is inclined upwards. In the embodiment of figure 2, only part of the auxiliary channel 9 is inclined upwards. During combustion stroke, the inclined portion helps preventing discharging of fluid from the nozzle portion 6 via the auxiliary channel 9.

In the embodiment of figure 2, the auxiliary channel 9 is curved. The shape of the auxiliary channel 9 opens towards the nozzle portion end of the prechamber 4. The uppermost point of the auxiliary channel 9 is thus between the ends of the auxiliary channel 9. The curved shape of the auxiliary channel 9 allows inclining part of the auxiliary channel 9 upwards while allowing the second end 9b of the auxiliary channel 9 to be positioned in the main combustion chamber 7.

In the embodiment of figure 3, the auxiliary channel 9 is straight, and the first end 9a of the auxiliary channel 9 is located closer to the nozzle portion end of the prechamber 4 than the second end 9b. A prechamber 4 with a straight auxiliary channel 9 is simpler to manufacture than a prechamber 4 with a curved auxiliary channel 9.

In the embodiments of the figures, the first end 9a of the auxiliary channel 9 is in a mounted state of the pre-chamber 4 in the longitudinal direction of the cylinder 1 above the level of the upper edges of the nozzle openings 6a. Alternatively, the first end 9a of the auxiliary channel 9 could be between two nozzle openings 6a.

In the embodiments of the figures, the prechamber 4 comprises several auxiliary channels 9. By providing the prechamber 4 with several auxiliary channels 9, a higher flow rate via the auxiliary channels 9 can be achieved.

The prechamber 4, or at least the nozzle portion 6 of the prechamber 4 can be made by means of additive manufacturing. Additive manufacturing allows complex shapes of the auxiliary channels 9. However, especially in case of straight auxiliary channels 9, the prechamber 4 could also be made using other manufacturing methods. For instance, the auxiliary channels 9 could be drilled.

## Claims

1. A prechamber (4) for a cylinder (1) of a piston engine, the prechamber (4) comprising a combustion portion (5), which is configured to receive a mixture of air and fuel for ignition of said mixture, a nozzle portion (6), which is configured to establish fluid communication between the combustion portion (5) of the pre-chamber (4) and a main combustion chamber (7) of the engine, the nozzle portion (6) comprising at least one nozzle opening (6a) that is configured to allow flow from the main combustion chamber (7) into the prechamber (4) and flow from the prechamber (4) into the main combustion chamber (7), and at least one auxiliary channel (9) having a first end (9a) and a second end (9b), the first end (9a) opening inside the prechamber (4) into the nozzle portion (6) and the cross-sectional area of the auxiliary channel (9) being smaller than the cross-sectional area of the at least one nozzle opening (6a), the nozzle portion (6) having a smaller volume than the combustion portion (5) and forming an elongated channel extending from the combustion portion (5) of the prechamber (4) towards the main combustion chamber (7), the cross-sectional area of the nozzle portion (6) seen in the longitudinal direction of the nozzle portion (6) being smaller than the cross-sectional area of the combustion portion (5) seen in the same direction, **characterized in that** the second end (9b) of the auxiliary channel (9) opens outside the prechamber (4), the auxiliary channel (9) being configured so that flow from the main combustion chamber (7) through said at least one nozzle opening (6a) into the prechamber (4) during compression stroke and flow from the prechamber (4) through said at least one nozzle opening (6a) into the main combustion chamber (7) during combustion stroke causes fluid flow through the auxiliary channel (9) into the nozzle portion (6) of the prechamber (4).

2. A prechamber (4) according to claim 1, wherein the cross-sectional area of the auxiliary channel (9) is at most 30 percent of the cross-sectional area of the nozzle opening (6a).

3. A prechamber (4) according to claim 1 or 2, wherein the second end (9b) of the auxiliary channel (9) opens onto the outer surface of the nozzle portion (6).

4. A prechamber (4) according to any of the preceding claims, wherein the second end (9b) of the auxiliary channel (9) opens in a mounted state of the prechamber (4) into the main combustion chamber (7).

5. A prechamber (4) according to any of the preceding claims, wherein the auxiliary channel (9) comprises a portion beginning from the first end (9a) and being inclined in a mounted state of the prechamber (4) from a lateral direction of the cylinder (1) upwards.

6. A prechamber (4) according to any of the preceding claims, wherein the first end (9a) of the auxiliary channel (9) is in a mounted state of the prechamber (4) in the longitudinal direction of the cylinder (1) above the level of the upper edge of the at least one nozzle opening (6a).

7. A prechamber (4) according to any of claims 1-5, wherein the prechamber (4) comprises several nozzle openings (6a) and the first end (9a) of the auxiliary channel (9) is between two nozzle openings (6a).

8. A prechamber (4) according to any of the preceding claims, wherein the auxiliary channel (9) is curved.

9. A prechamber (4) according to claim 8, wherein the shape of the auxiliary channel (9) opens towards the nozzle portion end of the prechamber (4).

10. A prechamber (4) according to any of claims 1-7, wherein the auxiliary channel (9) is straight, and the first end (9a) of the auxiliary channel (9) is located closer to the nozzle portion end of the prechamber (4) than the second end (9b).

11. A prechamber (4) according to any of the preceding claims, wherein the prechamber (4) comprises several auxiliary channels (9).

12. A cylinder head (8) for a piston engine, wherein the cylinder head (8) is provided with a prechamber (4) according to any of the preceding claims.

13. A piston engine comprising a prechamber according to any of claims 1-11.

## Patentansprüche

1. Vorkammer (4) für einen Zylinder (1) eines Kolbenmotors, wobei die Vorkammer (4) einen Verbrennungsabschnitt (5) umfasst, der dazu konfiguriert ist, ein Gemisch aus Luft und Kraftstoff zur Zündung des Gemischs aufzunehmen, einen Düsenabschnitt (6), der dazu konfiguriert ist, eine Fluidverbindung zwischen dem Verbrennungsabschnitt (5) der Vorkammer (4) und einer Hauptbrennkammer (7) des Motors herzustellen, wobei der Düsenabschnitt (6) mindestens eine Düsenöffnung (6a) umfasst, die so konfiguriert ist, dass sie eine Strömung von der Hauptbrennkammer (7) in die Vorkammer (4) und eine Strömung von der Vorkammer (4) in die Hauptbrennkammer (7) ermöglicht, und mindestens einen Hilfskanal (9) mit einem ersten Ende (9a) und einem zweiten Ende (9b), wobei das erste Ende (9a) innerhalb der Vorkammer (4) in den Düsenabschnitt (6) mündet und die Querschnittsfläche des Hilfskanals (9) kleiner ist als die Querschnittsfläche der mindestens einen Düsenöffnung (6a), wobei der Düsenabschnitt (6) ein kleineres Volumen als der Verbrennungsabschnitt (5) aufweist und einen länglichen Kanal bildet, der sich vom Verbrennungsabschnitt (5) der Vorkammer (4) in Richtung der Hauptbrennkammer (7) erstreckt, wobei die Querschnittsfläche des Düsenabschnitts (6) in Längsrichtung des Düsenabschnitts (6) gesehen kleiner ist als die Querschnittsfläche des Verbrennungsabschnitts (5) in derselben Richtung gesehen, **dadurch gekennzeichnet, dass** das zweite Ende (9b) des Hilfskanals (9) außerhalb der Vorkammer (4) mündet, wobei der Hilfskanal (9) so konfiguriert ist, dass ein Fluss von der Hauptbrennkammer (7) durch die mindestens eine Düsenöffnung (6a) in die Vorkammer (4) während des Kompressionshubs und ein Fluss von der Vorkammer (4) durch die mindestens eine Düsenöffnung (6a) in die Hauptbrennkammer (7) während des Verbrennungshubs einen Fluidfluss durch den Hilfskanal (9) in den Düsenabschnitt (6) der Vorkammer (4) bewirkt.

2. Vorkammer (4) nach Anspruch 1, wobei die Querschnittsfläche des Hilfskanals (9) höchstens 30 Prozent der Querschnittsfläche der Düsenöffnung (6a) beträgt.

3. Vorkammer (4) nach Anspruch 1 oder 2, wobei das zweite Ende (9b) des Hilfskanals (9) auf der Außenfläche des Düsenabschnitts (6) mündet.

4. Vorkammer (4) nach einem der vorhergehenden Ansprüche, wobei das zweite Ende (9b) des Hilfskanals (9) in einem montierten Zustand der Vorkammer (4) in die Hauptbrennkammer (7) mündet.

5. Vorkammer (4) nach einem der vorhergehenden Ansprüche, wobei der Hilfskanal (9) einen Abschnitt aufweist, der vom ersten Ende (9a) ausgeht und in einem montierten Zustand der Vorkammer (4) von einer seitlichen Richtung des Zylinders (1) nach oben geneigt ist.

6. Vorkammer (4) nach einem der vorhergehenden Ansprüche, wobei das erste Ende (9a) des Hilfskanals (9) in einem montierten Zustand der Vorkammer (4) in Längsrichtung des Zylinders (1) über dem Niveau der Oberkante der mindestens einen Düsenöffnung (6a) liegt.

7. Vorkammer (4) nach einem der Ansprüche 1 bis 5, wobei die Vorkammer (4) mehrere Düsenöffnungen (6a) aufweist und das erste Ende (9a) des Hilfskanals (9) zwischen zwei Düsenöffnungen (6a) liegt.

8. Vorkammer (4) nach einem der vorhergehenden Ansprüche, wobei der Hilfskanal (9) gekrümmt ist.

9. Vorkammer (4) nach Anspruch 8, wobei die Form des Hilfskanals (9) sich zum Düsenabschnittsende der Vorkammer (4) hin öffnet.

10. Vorkammer (4) nach einem der Ansprüche 1 bis 7, wobei der Hilfskanal (9) gerade ist und das erste Ende (9a) des Hilfskanals (9) näher am Düsenabschnittsende der Vorkammer (4) liegt als das zweite Ende (9b).

11. Vorkammer (4) nach einem der vorhergehenden Ansprüche, wobei die Vorkammer (4) mehrere Hilfskanäle (9) umfasst.

12. Zylinderkopf (8) für einen Kolbenmotor, wobei der Zylinderkopf (8) mit einer Vorkammer (4) nach einem der vorhergehenden Ansprüche versehen ist.

13. Kolbenmotor, der eine Vorkammer nach einem der Ansprüche 1 bis 11 umfasst.

## Revendications

1. Préchambre (4) pour un cylindre (1) d'un moteur à piston, la préchambre (4) comprenant une partie de combustion (5), qui est configurée pour recevoir un mélange d'air et de carburant pour l'allumage dudit mélange, une partie de buse (6), qui est configurée pour établir une communication fluidique entre la partie de combustion (5) de la préchambre (4) et une chambre de combustion principale (7) du moteur, la partie de buse (6) comprenant au moins une ouverture de buse (6a) qui est configurée pour permettre l'écoulement à partir de la chambre de combustion principale (7) dans la préchambre (4) et l'écoulement à partir de la préchambre (4) dans la chambre de combustion principale (7), et au moins un canal auxiliaire (9) ayant une première extrémité (9a) et une seconde extrémité (9b), la première extrémité (9a) s'ouvrant à l'intérieur de la préchambre (4) dans la partie de buse (6) et la surface de section transversale du canal auxiliaire (9) étant inférieure à la surface de section transversale de l'au moins une ouverture de buse (6a), la partie de buse (6) ayant un volume inférieur à la partie de combustion (5) et formant un canal allongé s'étendant de la partie de combustion (5) de la préchambre (4) vers la chambre de combustion principale (7), la surface de section transversale de la partie de buse (6) vue dans la direction longitudinale de la partie de buse (6) étant inférieure à la surface de section transversale de la partie de combustion (5) vue dans la même direction, **caractérisée en ce que** la seconde extrémité (9b) du canal auxiliaire (9) s'ouvre à l'extérieur de la préchambre (4), le canal auxiliaire (9) étant configuré de sorte que l'écoulement à partir de la chambre de combustion principale (7) à travers ladite au moins une ouverture de buse (6a) dans la préchambre (4) pendant la course de compression et l'écoulement à partir de la préchambre (4) à travers ladite au moins une ouverture de buse (6a) dans la chambre de combustion principale (7) pendant la course de combustion provoquent l'écoulement de fluide à travers le canal auxiliaire (9) dans la partie de buse (6) de la préchambre (4).

2. Préchambre (4) selon la revendication 1, dans laquelle la surface de section transversale du canal auxiliaire (9) représente au plus 30 pour cent de la surface de section transversale de l'ouverture de buse (6a) .

3. Préchambre (4) selon la revendication 1 ou 2, dans laquelle la seconde extrémité (9b) du canal auxiliaire (9) s'ouvre sur la surface externe de la partie de buse (6).

4. Préchambre (4) selon l'une quelconque des revendications précédentes, dans laquelle la seconde extrémité (9b) du canal auxiliaire (9) s'ouvre dans un état monté de la préchambre (4) dans la chambre de combustion principale (7).

5. Préchambre (4) selon l'une quelconque des revendications précédentes, dans laquelle le canal auxiliaire (9) comprend une partie commençant à partir de la première extrémité (9a) et étant inclinée dans un état monté de la préchambre (4) à partir d'une direction latérale du cylindre (1) vers le haut.

6. Préchambre (4) selon l'une quelconque des revendications précédentes, dans laquelle la première extrémité (9a) du canal auxiliaire (9) se trouve dans un état monté de la préchambre (4) dans la direction longitudinale du cylindre (1) au-dessus du niveau du bord supérieur de l'au moins une ouverture de buse (6a).

7. Préchambre (4) selon l'une quelconque des revendications 1 à 5, dans laquelle la préchambre (4) comprend plusieurs ouvertures de buse (6a) et la première extrémité (9a) du canal auxiliaire (9) est entre deux ouvertures de buse (6a).

8. Préchambre (4) selon l'une quelconque des revendications précédentes, dans laquelle le canal auxiliaire (9) est incurvé.

9. Préchambre (4) selon la revendication 8, dans laquelle la forme du canal auxiliaire (9) s'ouvre vers l'extrémité de partie de buse de la préchambre (4).

10. Préchambre (4) selon l'une quelconque des revendications 1 à 7, dans laquelle le canal auxiliaire (9) est droit, et la première extrémité (9a) du canal auxiliaire (9) est située plus près de l'extrémité de la partie de buse de la préchambre (4) que la seconde extrémité (9b).

11. Préchambre (4) selon l'une quelconque des revendications précédentes, dans laquelle la préchambre (4) comprend plusieurs canaux auxiliaires (9).

12. Culasse (8) pour un moteur à piston, dans laquelle la culasse (8) est pourvue d'une préchambre (4) selon l'une quelconque des revendications précédentes.

13. Moteur à piston comprenant une préchambre selon l'une quelconque des revendications 1 à 11.
